(19) Europäisches Patentamt
European Patent Office
Office européen des brevets

(11) Publication number: 0 095 676
A2

(12) EUROPEAN PATENT APPLICATION

(21) Application number: 83104990.3

(22) Date of filing: 20.05.83

(51) Int. Cl.³: C 08 G 77/38

(30) Priority: 21.05.82 US 380486

(43) Date of publication of application: 07.12.83 Bulletin 83/49

(84) Designated Contracting States: AT BE DE FR GB IT NL

(71) Applicant: SWS Silicones Corporation, Adrian/Michigan 49221 (US)

(72) Inventor: Martin, Eugene Ray, 8023 Springville Highway, Onsted Michigan 49265 (US)

(74) Representative: Wagner, Helga, Dr., c/o Wacker-Chemie GmbH Prinzregentenstrasse 22, D-8000 München 22 (DE)

# (54) Carboxylic acid-functional polysiloxane polymers, process for preparing the same and use thereof.

(57) The invention relates to novel carboxylic acid-functional polysiloxane polymers having at least one unit of the formula

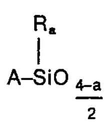

in which R is a monovalent hydrocarbon radical, A is a carboxylic acid-functional radical selected from the group consisting of

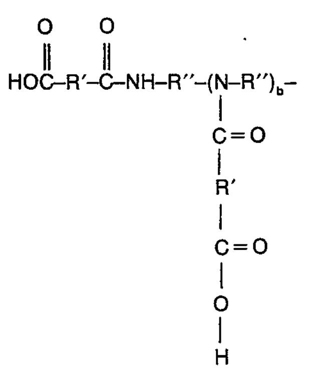

wherein R′ is a divalent hydrocarbon radical selected from the group consisting of $(CH_2)_y$, CH=CH, $C_{14}H_{26}$ or a cyclic hydrocarbon radical selected from the group consisting of $C_3H_4$, $C_4H_6$, $C_5H_8$, $C_6H_4$, $C_6H_6$, $C_6H_8$, $C_6H_{10}$ and $C_{10}H_6$, or a bicyclic radical selected from the group consisting of $C_7H_8$, $C_7H_{10}$, $C_8H_{10}$ and $C_8H_{13}$, R″ is selected from the group consisting of saturated divalent hydrocarbon radicals, hydrocarbonoxy radicals in which the hydrocarbon group is linked to the silicon by a carbon bond and the oxygen is in the form of an ether linkage and unsaturated divalent hydrocarbon radicals, a is a number of from 0 to 2, b is a number of from 0 to 10, and y is a number of from 0 to 10.

EP 0 095 676 A2

SWS Silicones Corporation

Munich, May 19, 1983
Dr.Wg/du

SWS 97/SWS-78

# Carboxylic Acid-Functional Polysiloxane Polymers, Process for Preparing the same and Use thereof

The present invention relates to polysiloxane polymers, particularly to carboxylic acid-functional polysiloxane polymers and more particularly to a process for preparing carboxylic acid-functional polysiloxane polymers.

## Background of the Invention

Carboxylic acid-functional polysiloxane polymers have been described in U. S. Patent No. 3,960,574 to Lee as additives for automobile polishes to impart detergent resistant properties to the standard types of automobile polishes. Also, U. S. Patent No. 4,011,362 to Stewart describes carboxylic acid-functional polysiloxanes and their use as release coatings for metal substrates. These carboxylic acid-functional polysiloxane polymers are composed of from 0.1 to 50 mole percent of $R_a R'_b SiO_{\frac{4-a-b}{2}}$ units and from 50 to 99.9 mole percent of

$R''_c SiO_{\frac{4-c}{2}}$ units, where R is a carboxylic acid-functional radical,

R' is a hydrocarbon or halogenated hydrocarbon radical, a has an average value of from 1 to 3, b has an average value of from 0 to 2, with the sum of a + b being from 1 to 3, R" is a hydrocarbon or halogenated hydrocarbon radical, and c has an average value of from 0 to 3. The carboxylic acid-functional radical represented by R in the above formula is one which has the structure HOOC-Q-, where Q is a divalent linking group attached to the silicon atom via a silicon-to-carbon bond. Examples of divalent linking groups are alkylene radicals containing from 2 to 10 carbon atoms and radicals containing from 2 to 10 carbon atoms which are composed of carbon, hydrogen and sulfur atoms in which the sulfur atoms are present as the thioether linkages.

Even though these references describe carboxylic acid-functional siloxanes as release coatings for metal substrates and as ingredients for detergent resistant polishes, they do not disclose carboxylic acid-functional siloxanes in which the carboxylic group is linked through an amide linking group to a silicon atom. Moreover, these patents do not disclose carboxylic acid-functional siloxanes in which the carboxylic acid group is linked through an amide group to a silicon atom and contain at least one hydrocarbonoxy group. Furthermore, these references do not disclose treating textile materials with carboxylic acid-functional polysiloxane polymers in which the carboxylic acid group is linked to the silicon through an amide group.

Therefore, it is an object of this invention to provide carboxylic acid-functional siloxanes. Another object of this invention is to provide a process for preparing carboxylic acid-functional siloxanes. Still another object of this invention is to provide carboxylic acid-functional siloxanes which may be used to treat textile materials to impart softness and water repellency thereto.

## Summary of the Invention

The foregoing objects and others which will become apparent from the following description are accomplished in accordance with this invention, generally speaking, by providing carboxylic acid-functional polysiloxane polymers having at least one unit of the formula

$$A\ \overset{\overset{R_a}{|}}{Si}O_{\frac{3-a}{2}}\quad ,$$

in which A is a carboxylic acid-functional radical having the formula

$$HO\overset{\overset{O}{\|}}{C}-R'-\overset{\overset{O}{\|}}{C}NH-R''-(\underset{\substack{|\\ C=O\\ |\\ R'\\ |\\ C=O\\ |\\ O\\ |\\ H}}{N}R'')_b-$$

wherein R is a monovalent hydrocarbon radical having up to 30 carbon atoms, R' is a divalent hydrocarbon radical selected from the group consisting of $(CH_2)_y$, $CH{=}CH$, $C_{14}H_{26}$ or a cyclic hydrocarbon radical selected from the group consisting of $C_3H_4$, $C_4H_6$, $C_5H_8$, $C_6H_4$, $C_6H_6$, $C_6H_8$, $C_6H_{10}$ and $C_{10}H_6$, or a bicyclic radical selected from the group consisting of $C_7H_8$, $C_7H_{10}$, $C_8H_{10}$ and $C_8H_{13}$, R" is selected from the group consisting of saturated divalent hydrocarbon radicals, hydrocarbonoxy radicals in which the hydrocarbon group is linked to the silicon by a carbon bond and the oxygen is in the form of an ether linkage and unsaturated divalent hydrocarbon radicals, a is a number of from 0 to 2, b is a number of from 0 to 10, and y is a number of from 0 to 10. The carboxylic acid-functional polysiloxane polymers may also contain siloxane units of the formula

$$R_cSiO_{\frac{4-c}{2}}$$

where R is the same as above and c is a number of from 0 to 3, in which the siloxanes may be terminated with silanol, hydrocarbonoxy or triorganosiloxy groups.

## Detailed Description of the Invention

The carboxylic acid-functional polysiloxane polymers are preferably prepared by reacting dicarboxylic acids or cyclic anhydrides thereof with aminofunctional polysiloxanes having at least one unit of the formula

$$NH_2-R''(NHR'')_{b}\overset{R_a}{Si}O_{\frac{3-a}{2}}$$

and copolymers containing at least one unit having the above formula and at least one siloxane structural unit of the formula

$$R_cSiO_{\frac{4-c}{2}}$$

where R is a monovalent hydrocarbon radical, R" is a divalent radical selected from the group consisting of saturated divalent hydrocarbon radicals, hydrocarbonoxy radicals in which the hydrocarbon group is linked to the silicon by a carbon bond and the oxygen is in the form of an ether linkage and unsaturated divalent hydrocarbon radicals, a, b and c are the same as above.

The aminofunctional polysiloxanes may be either linear or cyclic aminoalkylpolysiloxanes or aminoalkylalkoxypolysiloxanes which have terminal silanol, hydrocarbonoxy or triorganosiloxy groups.

Suitable examples of carboxylic acid-functional radicals represented by A are

$$HO\overset{O}{\overset{\|}{C}}-\overset{O}{\overset{\|}{C}}-NH-C_4H_8-$$ ,

$$HO\overset{O}{\overset{\|}{C}}(CH_2)_2-\overset{O}{\overset{\|}{C}}-NH-C_3H_6-$$ ,

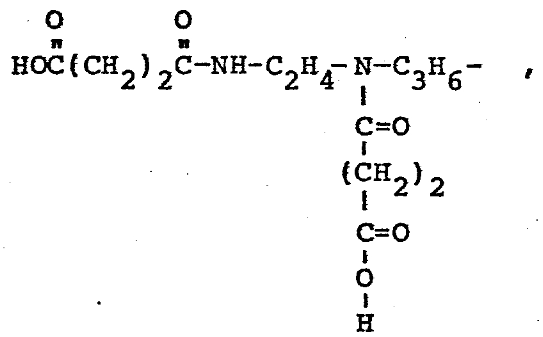

$$HO\overset{O}{\overset{\|}{C}}-CH_2-\overset{O}{\overset{\|}{C}}-NH-C_{18}H_{36}-$$ ,

$$HO\overset{O}{\overset{\|}{C}}-(CH_2)_4-\overset{O}{\overset{\|}{C}}-NH-C_3H_6-O-CH_2-CH=CH-$$ ,

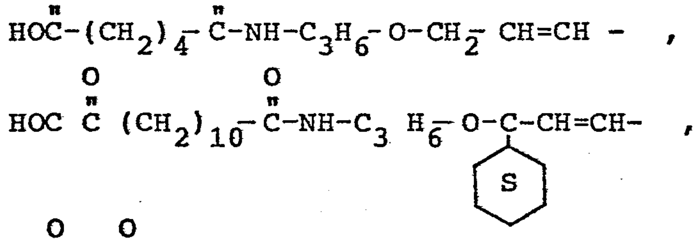

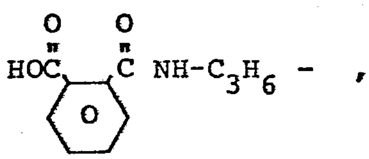

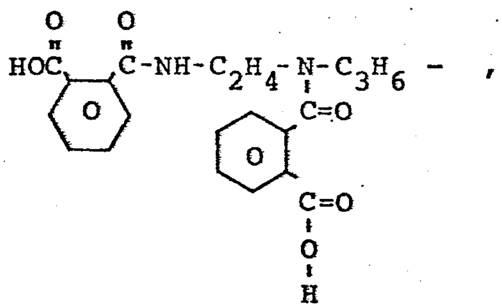

$$HO\overset{O}{\overset{\|}{C}}\ CH=CH-\overset{O}{\overset{\|}{C}}-NH-C_3H_6-$$ ,

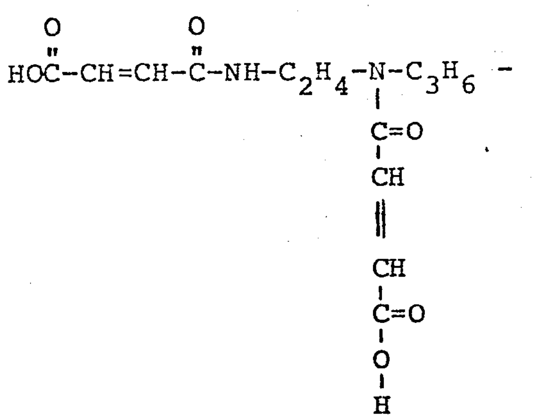
,

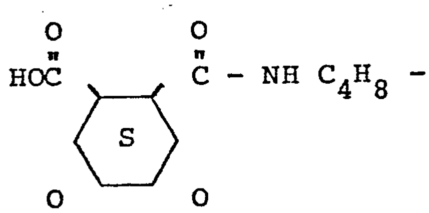
,

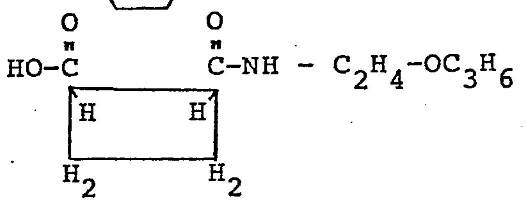
,

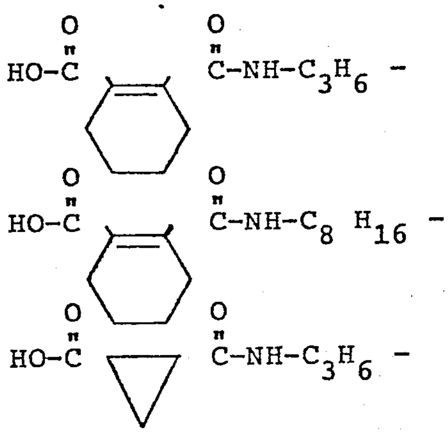
,

,

,

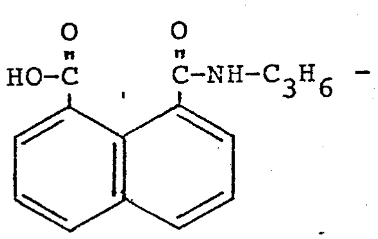
,

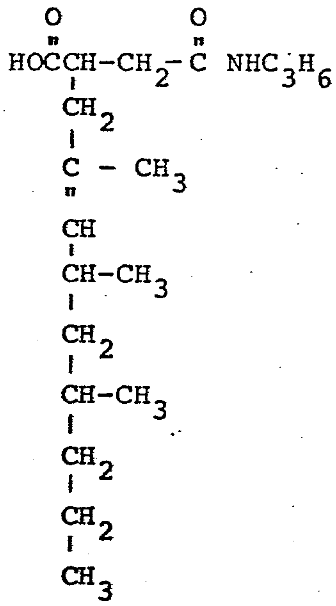
,

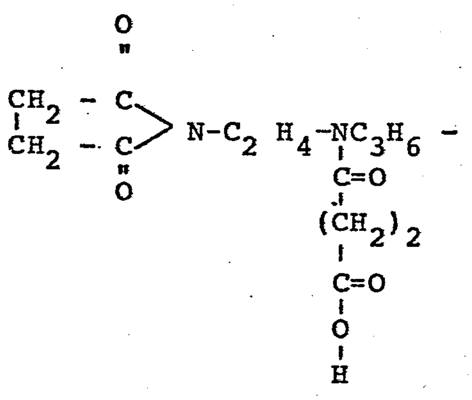
,

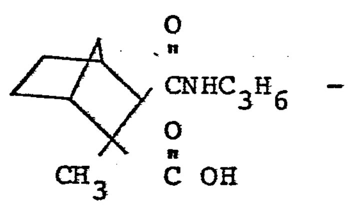

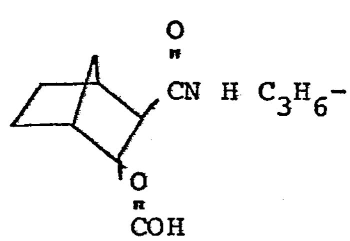

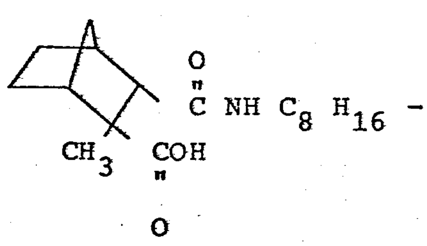
,

Among the monovalent hydrocarbon radicals represented by R are alkyl radicals having from 1 to 30 carbon atoms, e.g., methyl, ethyl, propyl, butyl, octyl, dodecyl, octadecyl, triacontyl and the like; cycloalkyl radicals, e.g., cyclopentyl, cyclohexyl, cycloheptyl and the like; mononuclear and binuclear aryl radicals, e.g., phenyl, naphthyl and the like; aralkyl radicals, e.g., benzyl, phenylethyl, phenylpropyl, phenylbutyl and the like; alkaryl radicals, e.g., tolyl, xylyl, ethylphenyl and the like.

Suitable examples of divalent hydrocarbon radicals represented by R' having from 1 to 12 carbon atoms are methylene, ethylene, trimethylene, tetramethylene, pentamethylene, hexamethylene and octamethylene and decamethylene radicals. Examples of divalent aryl radicals represented by R' are phenylene, naphthylene and cyclohexylene radicals.

Suitable examples of divalent hydrocarbon radicals represented by R" are radicals such as ethylene, trimethylene, hexamethylene, octamethylene; hydrocarbonoxy containing radicals of the formula

$$(C_2H_4O)_m(CH_2)_z,\ (C_3H_6O)_m(CH_2)_z \text{ and } (C_4H_8O)_m(CH_2)_z$$

where m is from 1 to 50, and z is a number of from 1 to 10, such as ethylene oxide, trimethylene oxide, tetramethylene oxide and polymers and copolymers thereof and alkenylene radicals such as vinylene, propenylene, butenylene, hexenylene and the like.

Examples of suitable aminoalkylalkylpolysiloxanes are cyclic trimers, tetamers, and pentamers of gamma-aminopropylmethylsiloxane, delta-aminobutylmethylsiloxane, epsilon-aminopentylmethylsiloxane and the like, as well as the hydrolyzates of gamma-aminoalkylalkyldialkoxysilanes, i.e., gamma-aminopropylmethyldialkoxysilanes with the aminopropylalkoxypolysiloxanes and the aminobutylalkoxypolysiloxanes. These aminofunctional polysiloxanes may be prepared in accordance with the process described in, for example, U. S. Patent No. 2,947,771 to Bailey or U. S. Patent 3,033,815 to Pike et al.

Other aminofunctional polysiloxane polymers which may be employed in the reaction with dicarboxylic acids or anhydrides thereof are those described in U. S. Patent No. 3,890,269 to Martin. These polysiloxane polymers are prepared by equilibrating a mixture containing an organopolysiloxane fluid and an aminofunctional silane or siloxane in the presence of a base catalyst.

Suitable examples of cyclic anhydrides which may be used to prepare the compositions of this invention are succinic anhydride, glutaconic anhydride, maleic anhydride, 1,2-cyclohexane dicarboxylic anhydride, 1-cyclohexane-1,2-dicarboxylic anhydride, 3-cyclohexene-1,2-dicarboxylic anhydride, 4-cyclohexene-1,2-dicarboxylic anhydride, 1,8-naphthalic acid anhydride, phthalic anhydride, hexahydrophthalic anhydride and methylbicyclo (2,2,1) heptane 2,3-dicarboxylic anhydride.

Generally, any dicarboxylic acid can be used to make the compositions of this invention with the proviso that it does not contain a reactive functional group other than the carboxylic acid group which will react with the amine group. Examples of suitable dicarboxylic acids are oxalic acid, malonic acid, succinic acid, glutaric acid, adipic acid, pimelic acid, suberic acid, 1,1-cyclopropane dicarboxylic acid, 1,2-cyclopropane dicarboxylic acid, azelaic acid, sebacic acid, 1,1-cyclobutane dicarboxylic acid, 1,3-cyclobutane dicarboxylic acid, 1,2 cyclopentane dicarboxylic acid, 1,3-cyclopentane dicarboxylic acid, phthalic acid and tetrahydrophthalic acid.

The reaction between the dicarboxylic acid or cyclic anhydride thereof and the aminofunctional polysiloxane is exothermic and may be carried out at a temperature ranging from about 50°C up to about 125°C or higher for a period of time varying from a few minutes up to several hours.

When a cyclic anhydride is reacted with the aminofunctional polysiloxane, the resultant product contains an amide linkage, whereas when a dicarboxylic acid is reacted with the aminofunctional polysiloxane an ammonium carboxylate is formed and the resultant product must be heated to an elevated temperature, e.g., above about 100°C or higher to form the corresponding amide. The water by-product thus formed may be removed at atmospheric pressure or at reduced pressure. In certain instances, it is preferred that an organic solvent capable of azeotroping with the water be employed to facilitate water

removal. Examples of suitable organic solvents which may be used are heptane, toluene and xylene.

Although it is not essential, it is preferred that the reaction between the dicarboxylic acid or anhydride thereof and the aminofunctional polysiloxane be conducted in an inert atmosphere. The reaction may also be carried out in the presence or absence of a solvent.

Generally, it is preferred that the mole ratio of dicarboxylic acid groups or cyclic anhydrides thereof to amine group to be reacted be about 2:1 to 1:2 and more preferably about 1:1. It is preferred, but not essential that all the amine groups be reacted with the dicarboxylic acid or cyclic anhydride. However, a slight excess of either reactant will not substantially alter the utility of the composition of this invention.

These carboxylic acid-functional polysiloxane polymers may be mixed with various diluents such as alcohols, e.g., ethanol and 1-propanol; aliphatic solvents such as heptane and iso-octane; aromatic solvents such as toluene and xylene and chlorinated solvents such as chloroform and 1,1,1-trichloroethane. Other diluents which may be employed are triorganosiloxy terminated diorganopolysiloxanes such as dimethylpolysiloxanes, silanol terminated dimethylpolysiloxanes, alkoxy terminated dimethylpolysiloxanes, cyclic siloxanes such as octamethylcyclotetrasiloxane, and organofunctional polysiloxanes such as mercaptofunctional polysiloxanes. These carboxylic acid-functional polysiloxanes may also be dissolved or dispersed in water.

The carboxylic acid-functional polysiloxane polymers may be used to treat textile fabrics to impart softness and water repellency to the fabrics. They may be applied to textile fabrics in concentrated form or diluted with a diluent. The amount of carboxylic acid-functional polysiloxane present in the diluent may range from about 0.25 to 99 percent, preferably from about 2 to 50 percent by weight based on the weight of the carboxylic acid-functional polysiloxane and diluent.

These carboxylic acid-functional polysiloxanes, and if desired other substances, may be applied to all textile materials, preferably organic textile materials on which organopolysiloxanes have been or could have been applied heretofore. Examples of

such textile materials are wool, cotton, rayon, hemp, natural silk, polypropylene, polyethylene, polyester, polyurethane, polyamide, cellulose acetate, polyacrylonitrile fibers, and mixtures of such fibers. The textile materials may consist of staple fibers or monofilaments.

The carboxylic acid-functional polysiloxanes of this invention and other substances, if desired, may be applied to the textile materials by any means known in the art, such as by spraying, immersion, padding, calendering or by gliding the fibers across a base which has been saturated with the carboxylic acid-functional polysiloxanes of this invention and other materials, if desired.

Generally, the solids add-on is in the range of from 0.001 to 20 percent and more preferably from about 0.05 to 10 percent, based on the original weight of the textile material.

After the textile material has been treated, it is dried at an elevated temperature, e.g., from about 50 to 200°C for a brief period of time, e.g., from about 3 to 15 minutes.

These carboxylic acid-functional polysiloxanes may be used alone or combined with aminoplast resins or certain crosslinking agents, e.g., melamine to achieve a durable finish.

The carboxylic acid-functional siloxane polymers of this invention may also be used as release coatings for metal substrates such as molds and fuser rolls. These carboxylic acid-functional siloxane polymers may be applied to the substrate alone or in admixture with a conventional silicone, e.g., dimethylpolysiloxanes. They also may be incorporated in polishes of all kinds to impart durability to the films formed on an article to be polished, e.g., automobiles and furniture. In certain applications it is advantageous to use these carboxylic acid-functional siloxane polymers with aminofunctional polysiloxanes or silicone resins to further enhance the durability of the polishes.

Various embodiments of this invention are illustrated in the following examples in which all parts are by weight unless otherwise specified.

Example 1

A reaction vessel containing 3.0 parts of phthalic anhydride and 148.1 parts of a trimethylsiloxy terminated

aminopropyl-functional dimethylpolysiloxane having 0.12 milliequivalents per gram of the aminopropyl group and having a viscosity of 192 cs. at 35°C is heated to 135°C and then allowed to cool to room temperature. The resultant product is then filtered. A clear, slightly yellow liquid is obtained which has a viscosity of 404 cs at 25°C and a pH of 6.3. Subsequent infrared analysis indicates the absence of the anhydride, i.e., the C=O group of the phthalic anhydride has absorption bands at about 1850 and 1765 $cm^{-1}$. The product has a C=O absorption band at about 1720 $cm^{-1}$ and 1650 $cm^{-1}$ indicating cleavage of the anhydride group. A composition having one unit of the formula

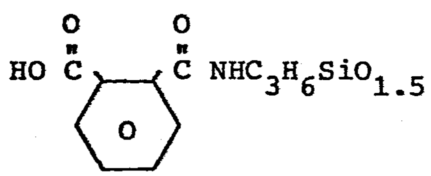 ,

108 $(CH_3)_2SiO$ units and 3.0 $(CH_3)_3SiO_{0.5}$ units is obtained.

<u>Example 2</u>

To a reaction vessel is added 361.1 parts of succinic anhydride and 4240 parts of a trimethylsiloxy terminated aminopropyl-functional dimethylpolysiloxane having a viscosity of 18 cs at 25°C and a base content of 0.85 milliequivalents per gram. The temperature in the reaction vessel increases about 7°C as a result of the exothermic reaction.

The reaction vessel is heated at 110°C and maintained at this temperature for 5 hours. The product is cooled to room temperature and filtered. A clear, yellow liquid having a viscosity of 394 cs at 25°C is obtained. Nuclear Magnetic Resonance analysis indicates that one $HO\overset{O}{\overset{\|}{C}}$ group is present for every 20.2 $Si(CH_3)_2$ groups.

<u>Example 3</u>

To a reaction vessel is added 88.9 parts of phthalic anhydride and 372.9 parts of a trimethylsiloxy terminated 2-aminoethyl-3-aminopropyl-functional dimethylpolysiloxane having a viscosity of 36 cs and a base content of 1.61 milliequivalents per gram. The vessel is heated to 130°C at which time a slight exotherm is observed. The reaction vessel is then cooled to ambient temperature with agitation. An amber, viscous liquid is obtained. Infrared analysis confirms the absence of the phthalic

anhydride and the presence of the carboxylic acid-functional group.

Example 4

To a reaction vessel is added 58.8 parts of maleic anhydride and 372.9 parts of a trimethylsiloxy-terminated 2-aminoethyl-3-aminopropyl-functional dimethylpolysiloxane having a viscosity of 36 cs and a base content of 1.61 milliequivalents per gram. The reaction vessel is heated to 45°C at which time a 43°C exotherm is observed. The reaction product is then cooled to ambient temperature with agitation. The resultant product is an amber liquid having a viscosity greater than 100,000 cs. at 25°C and an acid content of 1.5 milliequivalents per gram, (calculated 1.61). Infrared analysis confirms the absence of the maleic anhydride and presence of the carboxylic acid-functional group.

Example 5

To a reaction vessel is added 4.0 parts of succinic anhydride and 414 parts of a trimethylsiloxy terminated 2-aminoethyl-3-aminopropyl-functional dimethylpolysiloxane having a base content of .097 milliequivalents per gram and a viscosity of 415 cs. at 25°C. The vessel is heated to 100° and maintained at this temperature for 3.0 hours. The reaction vessel is then cooled to ambient temperature with agitation. A slight yellow colored liquid having an acid content of 0.084 milliequivalents per gram is obtained. Infrared analysis confirms the absence of the succinic anhydride and the presence of the carboxylic acid functional group.

Example 6

To a reaction vessel is added 113 parts of succinic anhydride and 812.9 parts of a methoxy terminated 2-aminoethyl-3-aminopropyl-functional dimethylpolysiloxane having a base content of 1.39 milliequivalents per gram and a viscosity of 26 cs at 25°C. The vessel is heated to a temperature of from 85 to 90°C and maintained at this temperature for 3.5 hours. The vessel is then cooled to ambient temperature with agitation. Gel permeation chromatagraphy confirms that the succinic anhydride has reacted and that the molecular weight of the polymer has not substantially increased. The product has a viscosity of 12,805 cs.at 25°C and infrared analysis confirms the presence

of the carboxylic acid-functional group.

Example 7

The procedure of Example 1 is repeated except that an equivalent amount of the following anhydrides are substituted for the phthalic anhydride: 1,2-cyclohexane dicarboxylic anhydride, 1-cyclohexene-1,2-dicarboxylic anhydride, 3-cyclohexene-1,2-dicarboxylic anhydride, 1,8-naphthalic acid anhydride and bicyclo 5-(2,2,1), methyl heptene 2,3-dicarboxylic anhydride, In all cases, infrared analysis indicated the presence of the carboxylic acid-functional group.

Example 8

To a reaction vessel is added 3,448 parts of a trimethylsiloxy terminated 2-aminoethyl-3-aminopropyl-functional dimethylpolysiloxane having a viscosity of 36 cs. at 25°C and a base content of 1.61 milliequivalents per gram and 552 parts of succinic anhydride. The vessel is heated up to 130°C and then cooled to ambient temperature with agitation. The resultant product, identified as composition (A) has a viscosity of 34,110 cs. at 25°C. Infrared analysis confirms the absence of succinic anhydride and the presence of the following groups

$$-\overset{O}{\overset{\|}{C}}OH, \quad -\overset{O}{\overset{\|}{C}}NH \quad .$$

About 100 parts of the above reaction product and 100 parts of xylene are heated to reflux temperature and the water by-product is collected in a Dean Stark Head until no more water is formed. A product identified as composition (B) having a viscosity of 96,376 cs. at 25°C is obtained. Infrared analysis indicates the presence of the following group.

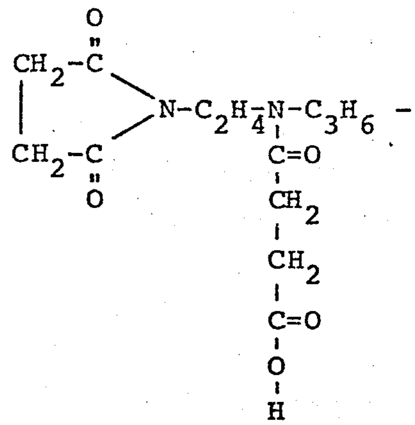

The product has an acid content of 0.79 milliequivalents per gram (calculated 0.8 milliequivalents per gram).

Compositions (A) and (B) are analyzed by gel permeation chromatography and found to have essentially the same molecular weight.

Example 9

To a vessel is added 200 parts of a trimethylsiloxy terminated 3-aminopropyl-functional dimethylpolysiloxane having a viscosity of 19 cs and a base equivalent of 0.85 milliequivalents per gram, 24.8 parts of adipic acid and 100 milliliters of xylene. The vessel is heated to reflux and the water by-product is azeotroped off until three milliliters of water is collected. The vessel is cooled to room temperature and the xylene is removed by vacuum stripping up to 100°C. A yellow, opaque liquid having a viscosity of 8,968 cs. at 25°C and an acid content of 0.87 milliequivalents per gram (calculated 0.85) is obtained.

Claims:

1. A carboxylic acid-functional polysiloxane composition having at least one unit of the formula

$$A-\overset{R_a}{\overset{|}{Si}}O_{\frac{4-a}{2}}$$

in which A is a carboxylic acid-functional radical having the formula

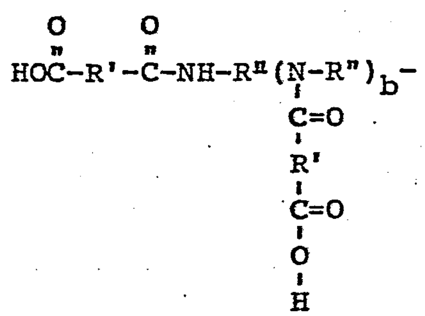

R is a monovalent hydrocarbon radical having up to 30 carbon atoms,
R' is a divalent hydrocarbon radical selected from the group consisting of $(CH_2)_y$, -CH=CH-, $C_{14}H_{26}$, cyclic hydrocarbon radicals selected from the group consisting of $C_3H_4$, $C_4H_6$, $C_5H_8$, $C_6H_4$, $C_6H_6$, $C_6H_8$, $C_6H_{10}$, $C_{10}H_6$ and bicyclic hydrocarbon radicals selected from the group consisting of $C_7H_8$, $C_7H_{10}$, $C_8H_{10}$ and $C_8H_{13}$,
R" is selected from the group consisting of saturated divalent hydrocarbon radicals, hydrocarbonoxy radicals in which the hydrocarbon group is linked to the silicon by a carbon bond and the oxygen is in the form of an ether linkage and unsaturated divalent hydrocarbon radicals,
_a_ is a number of from 0 to 2,
_b_ is a number of from 0 to 10 and
_y_ is a number of from 0 to 10.

2. The composition of claim 1, wherein the polysiloxane contains at least one siloxane unit of the formula

$$R_cSiO_{\frac{4-c}{2}}$$

where R is a monovalent hydrocarbon radical having up to 30 carbon atoms and c is a number of from 0 to 3.

3. The composition of claim 1 or 2, wherein b is 0, or equals to at least 1.

4. The composition of claim 1 or 2, wherein the polysiloxane polymers are mixed with a diluent, which is selected from the group consisting of an organic solvent for the polysiloxane polymers, water, an aminoplast resin, and a mercaptofunctional polysiloxane.

5. A process for preparing a carboxylic acid-functional polysiloxane composition characterized in that a cyclic anhydride is reacted with an aminofunctional polysiloxane having at least one unit of the formula

$$NH_2-R''(NHR'')_b-\overset{\overset{\displaystyle R_a}{|}}{Si}O_{\frac{3-a}{2}}$$

and optionally units of the formula

$$R_cSiO_{\frac{4-c}{2}}$$

in which

R is a monovalent hydrocarbon radical having up to 30 carbon atoms,

R" is selected from the group consisting of saturated divalent hydrocarbon radicals, hydrocarbonoxy radicals in which the hydrocarbon group is linked to the silicon by a carbon bond and the oxygen is in the form of an ether linkage and unsaturated divalent hydrocarbon radicals,

a is a number of from 0 to 2,

b is a number of from 0 to 10 and

c is a number of from 0 to 3,

at a temperature of at least 50°C.

6. The process of claim 5, wherein the mole ratio of anhydride group to amine group is from 2:1 to 1:2.

7. The process of claim 5, wherein a dicarboxylic acid is reacted with the aminofunctional polysiloxane and the resultant product is heated above 100°C to form the corresponding amide.

8. The process of claim 7, wherein the mole ratio of carboxylic acid group to amine group is from 2:1 to 1:2.

9. The process of claim 5, 6, 7 or 8, wherein the reaction is conducted in the presence of an organic solvent.

10. Use of the compositions of claim 1, 2 and 4 for treating textile materials to impart softness and water repellency thereto.